# EUROPÄISCHE PATENTSCHRIFT

(11) **EP 2 022 606 B1**
(45) Veröffentlichungstag und Bekanntmachung des Hinweises auf die Patenterteilung: **02.11.2011**
(21) Anmeldenummer: 08013577.5
(22) Anmeldetag: 29.07.2008
(51) Int. Cl.: B25C 11/00

(54) **Werkstück-Halter für eine Vakuumhaltevorrichtung**
Workpiece holder for a vacuum holding device
Porte-pièce pour un dispositif de maintien du vide

(30) Priorität: 08.08.2007 DE 102007037337
(43) Veröffentlichungstag der Anmeldung: 11.02.2009
(73) Patentinhaber: Festool GmbH, 73240 Wendlingen (DE)
(72) Erfinder: Randecker, Andreas, 72581 Dettingen (DE)
(74) Vertreter: Bregenzer, Michael

(56) Entgegenhaltungen:
- WO-A-2006/116890
- DE-A1- 10 119 029
- DE-U1- 29 823 473

## Beschreibung

Die Erfindung betrifft einen Werkstück-Halter für eine Vakuumhaltevorrichtung zum Halten eines Werkstückes mittels Vakuum gemäß dem Oberbegriff des Anspruchs 1.

Ein derartiger Werkstück-Halter geht aus WO 2006/116890 A1 hervor. Die Schrift erläutert eine Vakuumhaltevorrichtung mit einer Rasterfläche zum Spannen eines Gegenstandes mittels Unterdruck. Ein von der Haltevorrichtung mittels Unterdruck gehaltener Gegenstand kann mit unterschiedlichen Gegenmitteln, insbesondere Maschinentischen, verbunden werden.

Ein Werkstück-Halter ist in Gestalt eines sogenannten Blocksaugers, der beispielsweise auf einen Spannbalken aufgesetzt wird, aus dem Gebrauchsmuster DE 298 23 473 U1 bekannt. Der Blocksauger hat an seiner Unterseite einen Abstellfuß zum Abstellen auf einer Haltebasis, die über einen Druckluftanschluss an der Seite des Abstellfußes eine Vakuum bereitstellt. An der Unterseite des Blocksaugers ist ein Vakuum-Versorgungsanschluss zur Evakuierung mittels einer Vakuumpumpe vorgesehen. Bei dem Blocksauger wird jedoch keine Druckleitung in den Anschluss eingesteckt, sondern es erfolgt eine Evakuierung über den Spannbalken, auf den der Blocksauger aufgesetzt wird. Mit Hilfe einer Ventilanordnung, die mit dem Vakuum-Versorgungsanschluss an der Unterseite des Abstellfußes verbunden ist, kann das Vakuum bis zu einer Oberseite des Werkstück-Halters durchgeschaltet werden, die als Saugkopf ausgestaltet ist. Dort kann dann ein Werkstück angesaugt werden. Das Ansaugen bzw. Evakuieren des Abstellfußes geschieht beim Stand der Technik durch eine externe Ventilanordnung. Somit kann der Blocksauger nur durch ein entferntes Abschalten des Vakuums von der Abstellbasis, beispielsweise dem Spannbalken, entfernt werden. Für mobile Werkstück-Halter, die beispielsweise auf Baustellen benötigt werden, die in der Werkstatt an verschiedenen Orten eingesetzt werden sollen oder dergleichen, eignet sich ein Blocksauger somit nicht.

Es ist daher die Aufgabe der vorliegenden Erfindung, einen universell einsetzbaren Werkstück-Halter für eine Vakuumhaltevorrichtung zum Halten von Werkstücken mittels Vakuum bereitzustellen.

Zur Lösung der Aufgabe ist ein Werkstück-Halter gemäß der technischen Lehre des Anspruchs 1 vorgesehen.

Der Abstellfuß-Anschluss kann ein Luftkanal sein, der am Abstellfuß ausmündet.

Das erfindungsgemäße Konzept sieht vor, dass mit Hilfe der Ventilanordnung das Vakuum an dem Abstellfuß gesteuert werden kann.

Die Ventilanordnung hat auch ein Rückschlagventil, das einen Unterdruck aufrecht erhält, der in der Haltestellung des Schaltventils an dem Abstellfuß-Anschluss bereitstehen soll. Somit kann auch dann, wenn ein am Eingang der Ventilanordnung bzw. des Rückschlagventils der Unterdruck abfällt, der Unterdruck am Abstellfuß aufrecht erhalten werden.

Das Rückschlagventil ist vorzugsweise in einem Gehäuse des Schaltventiles angeordnet. Beispielsweise sind beide Ventile zu einer einzigen Ventileinheit integriert. Somit entsteht eine kompakte Bauweise. Leckageverluste werden gering gehalten, weil beispielsweise keine zusätzliche Verschraubung oder sonstige Verbindung zwischen dem Schaltventil und dem Rückschlagventil erforderlich ist.

Ein Saugkopf-Luftkanal zur Versorgung des Saugkopfes mit Unterdruck zweigt beispielsweise von einem Luftkanal ab, der das Schaltventil mit dem Vakuum-Versorgungsanschluss verbindet. Das Rückschlagventil ist am Eingang des Schaltventiles angeordnet und schließt den Eingang, wenn beispielsweise durch Betätigung des Saugkopfes ein Unterdruckverlust auftritt.

Das Schaltventil hat zweckmäßigerweise ein Luftkanalteil mit mindestens einem mit dem Vakuum-Versorgungsanschluss verbundenen Versorgungsluftkanal sowie mindestens einen mit dem Abstellfuß-Anschluss verbundenen Abstellfuß-Luftkanal. Diese beiden Luftkanäle münden an einer oder mehreren Stellen an einem Außenumfang des Luftkanalteils aus. An diesem Außenumfang ist ein Schaltelement, beispielsweise eine Art Hülse oder dergleichen, beweglich gelagert und verbindet die jeweiligen Mündungen miteinander, so dass Luft vom einen Luftkanal zum anderen Luftkanal strömen kann. Das Schaltelement verbindet die jeweiligen Luftkanäle vorzugsweise druck- bzw. vakuumdicht oder trennt die Luftkanäle druckdicht. An dem Schaltelement, beispielsweise dem vorgenannten Schieberteil, ist innenseitig vorzugsweise eine Tasche oder eine Kammer, insbesondere eine Ringkammer, vorhanden, die die jeweils ausmündenden Luftkanäle miteinander verbindet.

Vorzugsweise enthält das Schaltelement ein an dem Luftkanalteil verschieblich gelagertes Schiebeelement. Dies kann beispielsweise eine Art Schiebeblock sein.

Es ist auch denkbar, dass beispielsweise ein drehbares Schaltelement vorgesehen ist, um die Luftkanäle miteinander zu verbinden oder voneinander zu trennen. Vorzugsweise ist jedoch eine Längsverschiebung des Schaltelementes vorgesehen.

Beispielsweise enthält das Schiebeelement eine Schiebehülse, die von dem Luftkanalteil durchdrungen ist und an ihren Innenumfang einen Verbindungsraum zur Verbindung der Mündungen des Versorgungsluftkanals und des Abstellfuß-Luftkanals aufweist.

Es versteht sich, dass der die beiden Luftkanäle nur jeweils eine einzige Mündung aufweisen können oder einer oder beide der Kanäle mehrere Mündungen haben können. Ferner ist es denkbar, dass das Luftkanalteil mehrere Versorgungsluftkanäle und mehrere Abstellfuß-Luftkanäle aufweist, die jeweils am Außenumfang des Luftkanalteils ausmünden.

Die jeweiligen Mündungen des Versorgungsluftkanals und des Abstellfuß-Luftkanals haben vorzugsweise bezüglich einer Bewegungsrichtung des Schaltelements (drehen und/oder schieben) im Wesentlichen dieselbe Längs- oder Drehposition. Bei einem Schiebeelement handelt es sich hier beispielsweise um eine Längsposition, bei einem Dreh-Schaltelement um eine Drehposition. Ferner ist es auch denkbar, dass das Schaltelement eine überlagerte Dreh-Schiebelängsbewegung durchläuft, wenn es den Abstellfuß-Luftkanal und den Versorgungsluftkanal miteinander verbindet oder beide Kanäle voneinander trennt.

Das Rückschlagventil enthält zweckmäßigerweise ein in Schließstellung belastetes, beispielsweise federbelastetes, Ventilglied zum Öffnen und Schließen eines mit dem Vakuum-Versorgungsanschluss verbundenen Eingangs des Schaltventils. Der Eingang des Schaltventils ist vorzugsweise als ein Ventilsitz ausgestaltet.

Das Schaltventil ist beispielsweise ein 3/2-Wegeventil.

Nachfolgend wird ein Ausführungsbeispiel der Erfindung anhand der Zeichnung erläutert. Es zeigen:
- Fig. 1: eine Vakuumhaltevorrichtung insgesamt mit einem mittels eines Fußschalters betätigbaren Werkstück-Halter,

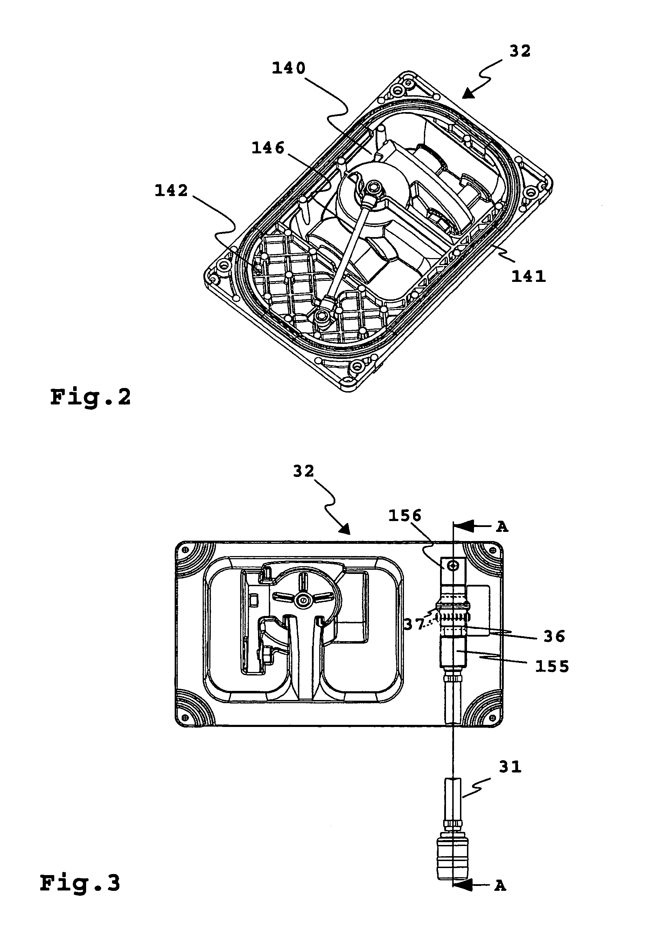

- Fig. 2: den Werkstück-Halter gemäß Figur 1 perspektivisch schräg von unten,
- Fig. 3: den Werkstück-Halter von oben, wobei das Schaltventil in zwei Schaltstellungen (Offenstellung = gestrichelte Linien, Belüftungsstellung = durchgehende Linien) gezeigt ist,

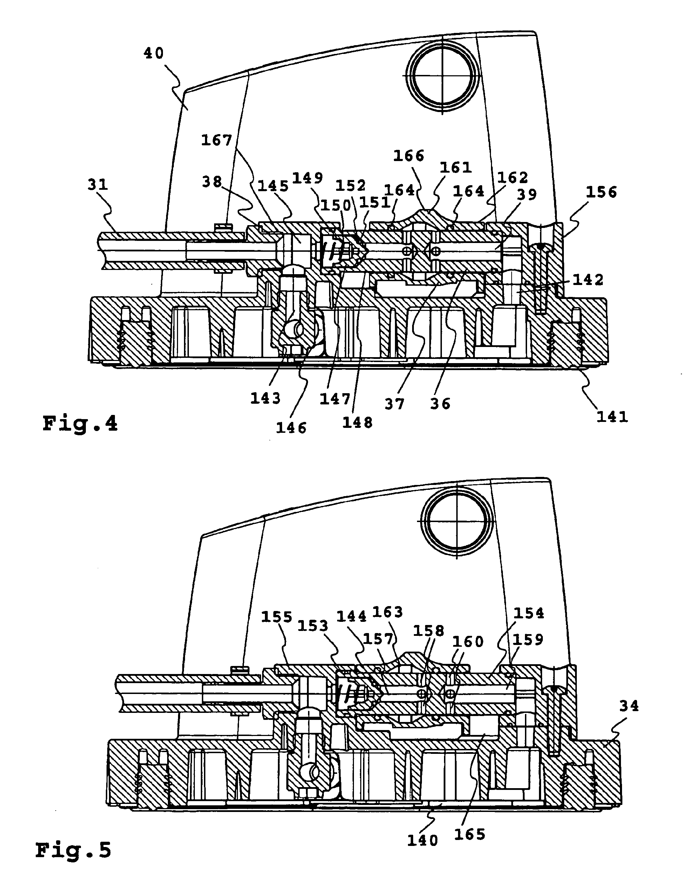

- Fig. 4: eine Querschnittsansicht des Werkstück-Halters, insbesondere der Ventilanordnung des Werkstück-Halters gemäß einer Schnittlinie A-A in Figur 3, wobei ein Schaltventil in seiner Offenstellung ist, so dass der Abstellfuß evakuiert ist, und
- Fig. 5: den Schnitt gemäß Figur 4, wobei das Schaltventil in seiner Belüftungsstellung ist, die zum Entfernen des Werkstück-Halters von einem Untergrund vorgesehen ist.

Eine Vakuumhaltevorrichtung 10 zum Halten von Werkstücken, beispielsweise zu bearbeitenden Holzteilen, Kunststoffteilen, Metallteilen oder dergleichen, enthält einen Werkstück-Halter 11 mit einem an einem Saugkopf-Halter 12 gehaltenen Saugkopf 13 zum Ansaugen eines jeweiligen Werkstückes. Eine Vakuumerzeugervorrichtung 14 erzeugt ein Vakuum zum Ansaugen des Werkstückes. Mit einem Fußschalter 15 kann das Vakuum, das an einer Ansaugfläche 16 des Saugkopfes 13 ansteht, geschaltet werden.

Die Vakuumhaltevorrichtung 10 enthält mehrere Komponenten, die jeweils leicht transportabel sind und so am Einsatzort, beispielsweise in einer Werkstatt, auf einer Baustelle oder dergleichen, zu Verfügung stehen.

Eine Vakuumpumpe 17 der Vakuumerzeugervorrichtung 14 ist beispielsweise in einem Transportbehälter 18 angeordnet, der als System-Transportbehälter oder Transportkoffer ausgestaltet ist. Der Transportbehälter 18 passt zu einem System von anderen Transportbehältern, die beispielsweise zum Transport von Werkzeugen (Bohrern, Schleifgeräten und dergleichen) dienen. Der Transportbehälter 18 enthält ein kistenartiges Unterteil 19, das mit einem Deckel 20 verschließbar ist. Die Vakuumpumpe 17 ist in einem Kapseleinsatz 21 angeordnet, das die Vakuumpumpe 17 vollständig kapselt, so dass diese elektrisch isoliert ist und zudem schallgedämpft und gegen Stoßbelastung geschützt in dem Transportbehälter 18 angeordnet ist.

Der Transportbehälter 18 schützt sämtliche in seinem intern angeordneten Komponenten, insbesondere die Vakuumpumpe 17, und kann auch - und sollte - bei geschlossenem Deckel 20 bedient werden. An einer Seitenwand 22 des Transportbehälters 18 sind nämlich ein Bedienbereich 23 sowie ein Anschlussbereich 24 zum Anschließen weiterer Komponenten und zum Bedienen der Vakuumerzeugervorrichtung 14 vorgesehen. Dort befinden sich als Bedieneinrichtungen 25 beispielsweise ein elektrischer Ein- und Ausschalter 26 sowie eine Druckanzeige bzw. Vakuumanzeige 27, z.B. ein Manometer oder Vakuummeter, und als Anschlusseinrichtungen 28 ein elektrischer Anschluss 29 zur Stromversorgung der Vakuumpumpe 17 sowie ein Vakuumanschluss 30. Somit ist die Vakuumerzeugervorrichtung 14 von einer Seite her bedienbar.

An den Vakuumanschluss 30 kann ein Luftschlauch 31 zur Vakuumversorgung des Werkstück-Halters 11 angeschlossen werden. Der Luftschlauch 31 hat vorteilhaft eine Schnellkupplung 31a, die in eine korrespondierende Schnellkupplung 31b am Vakuumanschluss 30 eingesteckt werden kann.

Der Werkstück-Halter 11 enthält eine Abstellbasis 32 zum Abstellen auf einem vorzugsweise ebenen Untergrund. Zwar könnte die Abstellbasis beispielsweise mit Schrauben an einem Untergrund befestigt werden, wofür Schraublöcher 33 vorzugsweise an ihren Eckbereichen vorgesehen sind. Bevorzugt ist jedoch ein Abstellen mittels Vakuum bzw. ein Halten am Untergrund mittels Vakuum. Dazu kann ein Abstellfuß 34 evakuiert werden, so dass der Abstellfuß 34 am Untergrund festgesaugt ist.

Zum Schalten des Vakuums an der Unterseite des plattenartigen Abstellfußes 34 ist eine Ventilanordnung 35 mit einem Schaltventil 36 vorgesehen. Die Ventilanordnung 35 ist an einer Oberseite des Abstellfußes 34 angeordnet, so dass sie leicht zugänglich ist. Somit kann ein Schaltelement 37 des Schaltventils 36 leicht ergriffen werden, das zum Schalten des Schaltventils 36 zwischen einer Haltestellung und einer Belüftungsstellung dient. In der Haltestellung verbindet das Schaltventil 36 ein an einem Vakuum-Versorgungsanschluss 38 des Werkstück-Halters 11 über den Luftschlauch 31 bereitgestelltes Vakuum mit einem Abstellfuß-Anschluss 39 der Ventilanordnung 35, so dass der Abstellfuß 34 evakuiert wird und sich auf einem Untergrund ansaugt. In der Belüftungsstellung hingegen sind die Anschlüsse 38, 39 voneinander getrennt, so dass das Vakuum am Abstellfuß 34 nicht aufrechterhalten wird und somit der Werkstück-Halter 11 vom Untergrund entfernt werden kann.

Der Saugkopf-Halter 12 ist an dem Werkstück-Halter 11 beweglich gelagert, vorliegend schwenkbar. Von dem Abstellfuß 34 steht eine Schwenklagerbasis 40 nach oben ab, an der der Saugkopf-Halter 12 schwenkbar gelagert ist. Lagerstücke 41 des Saugkopf-Halters 12, beispielsweise Bolzen, sind schwenkbar in Lageraufnahmen 42 an Seitenteilen 43 der Schwenklagerbasis 40 schwenkbar gelagert. Die Lageraufnamen 42 sind beispielsweise Bohrungen in den als Wandungen ausgestalteten Seitenteilen 43. Die Lagerstücke 41 greifen beispielsweise in Aufnahmen 48 des Saugkopf-Halters 12 ein.

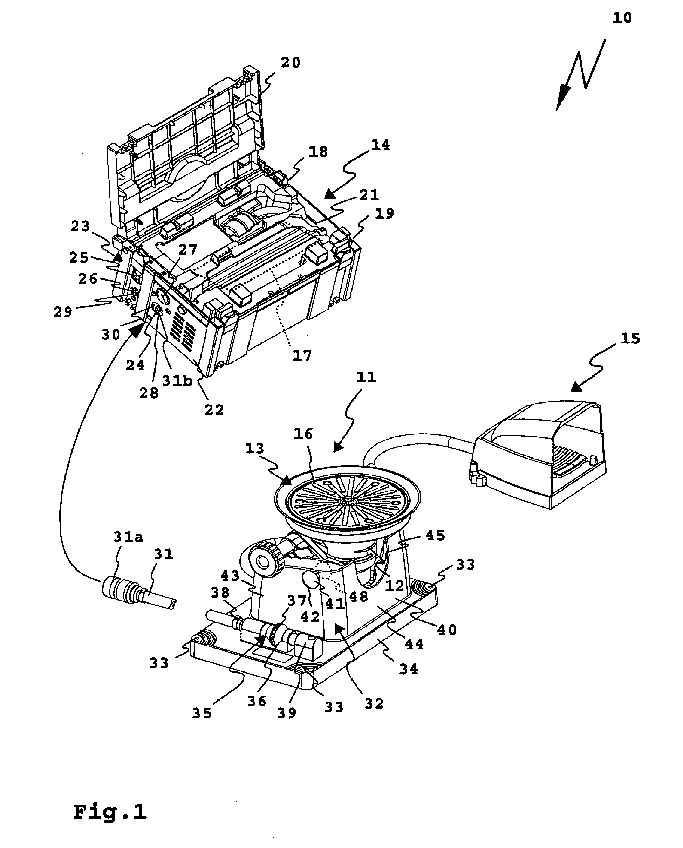

An einer Vorderwand 44 zwischen den Seitenteilen 43 ist eine Schwenkausnehmung 45 für den Saugkopf-Halter 12 bzw. den Saugkopf 13 vorgesehen, so dass der Saugkopf 13 von der in Figur 1 dargestellten vertikalen Stellung zur Seite in eine im Wesentlichen horizontal verlaufende Stellung geschwenkt werden kann. Somit ist der Schwenkbereich des Saugkopfes 13 erweitert, beispielsweise auf einen Bereich von etwa 90°.

In der jeweiligen Schwenkposition kann der Saugkopf-Halter durch eine nicht sichtbare Feststelleinrichtung festgelegt werden, beispielsweise eine Klemmschraube, einen Klemmhebel oder dergleichen an dem in Figur 1 vom Betrachter abgewandten Seitenteil 43.

An der Unterseite der Abstellbasis 32 ist ein evakuierbarer Hohlraum 140 vorgesehen. Am Außenumfang der Unterseite des Abstellfußes 34 ist zur Begrenzung und Abdichtung des Hohlraums 140 eine Dichtung 141 angeordnet. Der Hohlraum 140 ist über einen Luftkanal 142 mit dem Abstellfuß-Anschluss 39 des Schaltventils 36 verbunden, so dass in dessen Haltestellung Luft über den Luftkanal 142 aus dem Hohlraum 140 abgesaugt werden kann. Dadurch saugt sich der Abstellfuß 34 am Untergrund fest.

Ein Saugkopf-Luftkanal 143 zur Versorgung des Saugkopfes 13 mit Unterdruck bzw. Vakuum zweigt vor einem Eingang 144 des Schaltventils 36 von einem Luftkanal 145 ab, der das Schaltventil 36 mit dem Vakuum-Versorgungsanschluss 38 verbindet. Am Vakuum-Versorgungsanschluss 38 ist vorzugsweise ein Schnellkupplungsanschluss 167 zum Anschluss des Luftschlauches 31 vorgesehen.

Der Luftkanal 145 führt über eine Leitung 146 zum Saugkopf 13. Zwischen einem Vakuumanschluss des Saugkopf-Halters 12 und der Leitung 146 ist ein Abgang, z.B. eine Y-Verzweigung, für den Fußschalter 15 vorgesehen. Der Abgang ist vorteilhaft in einer Aufnahme des Werkstück-Halters 11 für den Saugkopf-Halter 12 angeordnet.

Wird der Fußschalter 15 betätigt, fällt der Unterdruck am Eingang der Ventilanordnung 35 ab. Dann hält ein Rückschlagventil 147 den Unterdruck am Abstellfuß-Anschluss 39 aufrecht.

Das Rückschlagventil 147 bildet eine einstückige Baueinheit mit dem Schaltventil 36. Beide Ventile sind in einem gemeinsamen Ventilgehäuse 148 angeordnet bzw. weisen ein gemeinsames Ventilgehäuse 148 auf.

Das Rückschlagventil 147 enthält ein Ventilglied 149. Das Ventilglied 149 ist längsbeweglich in einem Ventilkanal 153 eines Luftkanalteils 154 des Schaltventils 136 gelagert. Das Luftkanalteil 154 bildet das Ventilgehäuse 148.

Das Ventilglied 149 ist am Eingang 144 des Schaltventils 36 angeordnet. Der Eingang 144 enthält einen zweckmäßigerweise konischen Ventilsitz 151 für das Ventilglied 149. Das vordere, dem Ventilsitz 151 zugewandte Ende des Ventilglieds 149 ist zweckmäßigerweise konisch. Am vorderen Ende des Ventilglieds 149 ist vorteilhaft eine Dichtung 152 angeordnet, so dass dieses in seiner Schließstellung dicht im Ventilsitz 151 sitzt.

Das Ventilglied 149 ist in Richtung seiner Schließstellung federbelastet. Dazu ist eine Feder 150 vorgesehen, die sich einerseits am Gehäuse 148 und andererseits am Ventilglied 149 abstützt. Die Rückseite des Ventilglieds 149 hat eine Aufnahme für die Feder 150.

Die Montage des Schaltventils 36 ist insofern einfach, als dass das bereits mit vormontiertem Ventilglied 149 versehene Luftkanalteil 154 an Halterungen 155, 156 der Abstellbasis 32 montiert werden kann. Die Halterungen 155, 156 enthalten Aufnahmen für das Luftkanalteil 154. Die Halterung 155 enthält den Saugkopf-Luftkanal 143, die Halterung 156 den Luftkanal 142.

Das Luftkanalteil 154 ist als eine Art Rohrstück ausgestaltet. Im Inneren des Luftkanalteils 154 verläuft ein Versorgungsluftkanal 157 vom Eingang 144 her, der nach radial außen an mehreren Öffnungen oder Mündungen 158 ausmündet. Ferner ist im Inneren des Luftkanalteils 154 ein Abstellfuß-Luftkanal 159 vorgesehen, der ebenfalls am Außenumfang Luftkanalteils 154 an mehreren Mündungen 169 nach radial außen ausmündet und mit dem Abstellfuß-Anschluss 39 verbunden ist. Die Mündungen 158 und die Mündungen 160 haben jeweils in Längserstreckungsrichtung des Luftkanalteils 154 dieselbe Längsposition.

Das Schaltelement 37 ist zwischen den beiden Halterungen 155, 156 längsverschieblich am Luftkanalteil 154 gelagert. Das Schaltelement 37 enthält ein Schiebeelement 161, das als eine Art Schiebehülse 162 ausgestaltet ist. Die Schiebehülse 162 wird von dem Luftkanalteil 154 durchdrungen. Am Innenumfang der Schiebehülse 162 ist ein Verbindungsraum 163 vorhanden, der in der Durchlassstellung des Schaltventils 36 die Mündungen 158, 160 fluidtechnisch miteinander verbindet.

Der Verbindungsraum 163 ist vorzugsweise ein Ringraum, so dass es auf die jeweilige Drehposition der Schiebehülse 162 am Luftkanalteil 154 nicht ankommt. Dichtungen 164 beidseits des Verbindungsraums 163, die am Außenumfang des Luftkanalteil 154 anliegen, sorgen für eine druckdichte Verbindung des Schiebeelements 161 mit dem Luftkanalteil 154. Somit kann keine Falschluft seitlich in das Schiebeelement 161 eindringen, was die Ansaugleistung der Vakuumerzeugervorrichtung 14 am Abstellfuß 34 mindern würde.

Zwar kommt es auf die jeweilige Drehposition des Schaltelements 37 nicht an. Dennoch ist eine Linearführung 165 in einem Zwischenraum zwischen dem Abstellfuß 34 und dem Luftkanalteil 154 vorgesehen, so dass die Schiebehülse 162 zwar linear verschiebbar, jedoch nicht drehbar ist.

Das Schiebeelement 161 kann an einem Bedienvorsprung 166 ergriffen werden. Der Bedienvorsprung 166 ist beispielsweise eine Art Wulst, der vor die Schiebehülse 162 nach radial außen vorsteht. Der Bedienvorsprung 166 kann beispielsweise mit einem Finger ergriffen werden, so dass das Schiebeelement 161 bequem ergriffen werden kann.

## Patentansprüche

1. Werkstück-Halter für eine Vakuumhaltevorrichtung (10) zum Halten eines Werkstückes mittels Vakuum, mit einem Saugkopf (13) , mit einem evakuierbaren Abstellfuß (34) zum Abstellen auf einem Untergrund, mit einem Vakuum-Versorgungsanschluss (38) zum Anschluss einer Vakuumpumpe (17), wobei eine Ventilanordnung (35) mit dem Vakuum-Versorgungsanschluss (38) verbunden ist, wobei die Ventilanordnung (35) einen Abstellfuß-Anschluss (39) zur Bereitstellung eines Vakuums für den Abstellfuß (34) des Werkstück-Halters aufweist, und wobei die Ventilanordnung (35) ein zwischen einer Haltestellung, und einer Belüftungsstellung umschaltbares Schaltventil (36) aufweist, das in der Haltestellung eine Verbindung zwischen dem Abstellfuß-Anschluss (39) und dem Vakuum-Versorgungsanschluss (38) herstellt, so dass an dem Abstellfuß-Anschluss (39) ein Unterdruck bereitsteht, und das in der Belüftungsstellung zum Entfernen des Abstellfußes (34) von dem Untergrund die Verbindung zwischen dem Abstellfuß-Anschluss (39) und dem Vakuum-Versorgungsanschluss (38) trennt, **dadurch gekennzeichnet, dass** die Ventilanordnung (35) ein Rückschlagventil (147) aufweist, das einen Unterdruck an dem Abstellfuß-Anschluss (39) aufrechterhält.

2. Werkstück-Halter nach Anspruch 1, **dadurch gekennzeichnet, dass** das Rückschlagventil (147) in einem Gehäuse (148) des Schaltventils (36) angeordnet ist oder das Rückschlagventil (147) und das Schaltventil (36) in einem gemeinsamen Gehäuse (148) angeordnet sind.

3. Werkstück-Halter nach Anspruch 1 oder 2, **dadurch gekennzeichnet, dass** das Rückschlagventil (147) an einem Eingang (144) des Schaltventils (36) angeordnet ist und den Eingang (144) bei einem Unterdruckverlust schließt.

4. Werkstück-Halter nach Anspruch 3, **dadurch gekennzeichnet, dass** ein Saugkopf-Luftkanal (143) zur Versorgung des Saugkopfs (13) mit Unterdruck von einem den Eingang (144) des Schaltventils (36) mit dem Vakuum-Versorgungsanschluss (38) verbindenden Luftkanal (145) abzweigt, und dass das Rückschlagventil (147) am Eingang (144) des Schaltventils (36) angeordnet ist und den Eingang (144) bei einem durch Betätigung des Saugkopfs (13) hervorgerufenen Unterdruckverlust schließt.

5. Werkstück-Halter nach einem der Ansprüche 1 bis 4, **dadurch gekennzeichnet, dass** das Rückschlagventil (147) ein in Schließstellung belastetes, insbesondere federbelastetes, Ventilglied (149) zum Öffnen und Schließen eines mit dem Vakuum-Versorgungsanschluss (38) verbundenen Eingangs (144) des Schaltventils (36) aufweist.

6. Werkstück-Halter nach einem der vorhergehenden Ansprüche, **dadurch gekennzeichnet, dass** das Schaltventil (36) ein Luftkanalteil (154) mit mindestens einem mit dem Vakuum-Versorgungsanschluss (38) verbundenen Versorgungsluftkanal (157) und mindestens einem mit dem Abstellfuß-Anschluss (39) verbunden Abstellfuß-Luftkanal (159) aufweist, und dass der Versorgungsluftkanal (157) und der Abstellfuß-Luftkanal (159) an einem Außenumfang des Luftkanalteils (154) münden und durch ein an dem Außenumfang des Luftkanalteils (154) beweglich gelagertes Schaltelement (37) miteinander verbindbar oder voneinander druckdicht trennbar sind.

7. Werkstück-Halter nach Anspruch 6, **dadurch gekennzeichnet, dass** das Schaltelement (37) ein an dem Luftkanalteil (154) verschieblich gelagertes, insbesondere manuell betätigbares, Schiebeelement (161) enthält.

8. Werkstück-Halter nach Anspruch 6 oder 7, **dadurch gekennzeichnet, dass** das Schiebeelement (161) eine Schiebehülse (162) enthält, die von dem Luftkanalteil (154) durchdrungen ist und an deren Innenumfang ein Verbindungsraum (163) zur Verbindung der Mündungen (158, 160) des Versorgungsluftkanals (157) und des Abstellfuß-Luftkanals (159) vorhanden ist.

9. Werkstück-Halter nach einem der Ansprüche 6 bis 8, **dadurch gekennzeichnet, dass** der Versorgungsluftkanal (157) und/oder der Abstellfuß-Luftkanal (159) jeweils mindestens zwei Mündungen (158, 160) an der Außenseite des Luftkanalteils (154) aufweisen.

10. Werkstück-Halter nach Anspruch 9, **dadurch gekennzeichnet, dass** die jeweiligen Mündungen (158, 160) des Versorgungsluftkanals (157) und des Abstellfuß-Luftkanals (159) bezüglich einer Bewegungsrichtung des Schaltelements (37) im wesentlichen dieselbe Längs- oder Drehposition aufweisen.

11. Werkstück-Halter nach einem der vorhergehenden Ansprüche, **dadurch gekennzeichnet, dass** das Schaltventil (36) ein 3/2-Wegeventil ist.

## Claims

1. Workpiece holder for a vacuum holding device (10) for holding a workpiece by means of vacuum, with a suction head (13) with an evacuable support foot (34) for setting down on a base, with a vacuum supply port (38) for the connection of a vacuum pump (17), wherein a valve assembly (35) is connected to the vacuum supply port (38), wherein the valve assembly (35) has a support foot port (39) for the provision of a vacuum for the support foot (34) of the workpiece holder, and wherein the valve assembly (35) has a control valve (36) switchable between a holding position and a venting position, and which in the holding position makes a connection between the support foot port (39) and the vacuum supply port (38), so that a partial vacuum is provided at the support foot port (39) and in the venting position breaks the connection between the support foot port (39) and the vacuum supply port (38) for removal of the support foot (34), **characterised in that** the valve assembly (35) has a non-return valve (147) which maintains a partial vacuum at the support foot port (39).

2. Workpiece holder according to claim 1, **characterised in that** the non-return valve (147) is mounted in a housing (148) of the control valve (36), or that the non-return valve (147) and the control valve (36) are mounted in a common housing (148).

3. Workpiece holder according to claim 1 or 2, **characterised in that** the non-return valve (147) is provided at an inlet (144) of the control valve (36), and closes the inlet (144) in the event of a loss of partial vacuum.

4. Workpiece holder according to claim 3, **characterised in that** a suction head air duct (143) for supplying the suction head (13) with partial vacuum branches off from an air duct (145) connecting the inlet (144) of the control valve (36) with the vacuum supply port (38), and that the non-return valve (147) is located at the inlet (144) of the control valve (36) and closes the inlet (144) in the event of a loss of partial vacuum due to actuation of the suction head (13).

5. Workpiece holder according to any of claims 1 to 4, **characterised in that** the non-return valve (147) has a valve member (149) biased in the closed position, in particular spring-loaded, for opening and closing an inlet (144) of the control valve (36) connected to the vacuum supply port (38).

6. Workpiece holder according to any of the preceding claims, **characterised in that** the control valve (36) has an air duct section (154) with at least one supply air duct (157) connected to the vacuum supply port (38) and at least one support foot air duct (159) connected to the support foot port (39), and that the supply air duct (157) and the support foot air duct (159) lead to an outer periphery of the air duct section (154), and may be connected to one another, or separated with pressure-tightness, by a switching element (37) mounted movably on the outer periphery of the air duct section (154).

7. Workpiece holder according to claim 6, **characterised in that** the switching element (37) includes a slide element (161), movably mounted on the air duct section (154) and in particular manually operable.

8. Workpiece holder according to claim 6 or 7, **characterised in that** the slide element (161) includes a sliding sleeve (162) which is penetrated by the air duct section (154) and on the inner periphery of which there is provided a connecting space (163) to connect the orifices (158, 160) of the supply air duct (157) and the support foot air duct (159).

9. Workpiece holder according to any of claims 6 to 8, **characterised in that** the supply air duct (157) and/or the support foot air duct (159) each have at least two orifices (158, 160) on the outside of the air duct section (154).

10. Workpiece holder according to claim 9, **characterised in that** the respective orifices (158, 160) of the supply air duct (157) and the support foot air duct (159) have substantially the same longitudinal or rotary position relative to a movement direction of the switching element (37).

11. Workpiece holder according to any of the preceding claims, **characterised in that** the control valve (36) is a 3/2-way valve.

## Revendications

1. Porte-pièce pour un dispositif de maintien du vide (10) destiné à maintenir une pièce par le vide, présentant une tête aspirante (13), un pied à poser (34) pouvant être évacué, destiné à être posé sur un fond, un raccordement d'alimentation au vide (38) pour le raccordement d'une pompe à vide (17), dans lequel un ensemble de soupape (35) est relié au raccordement d'alimentation au vide (38), l'ensemble de soupape (35) présente un raccordement du pied à poser (39) pour l'approvisionnement en vide du pied à poser (34) du porte-pièce, et l'ensemble de soupape (35) présente une soupape de commutation (36) commutable entre une position de maintien et une position de ventilation, qui établit dans la position de maintien une liaison entre le raccordement du pied à poser (39) et le raccordement d'alimentation au vide (38) de sorte qu'une dépression soit disponible sur le raccordement du pied à poser (39), et qui sépare la liaison entre le raccordement du pied à poser (39) et le raccordement d'alimentation en vide (38) dans la position de ventilation afin de retirer le pied à poser (34) du fond, **caractérisé en ce que** l'ensemble de soupape (35) présente un clapet antiretour (147) qui maintient une dépression sur le raccordement du pied à poser (39).

2. Porte-pièce selon la revendication 1, **caractérisé en ce que** le clapet antiretour (147) est disposé dans un boîtier (148) de la soupape de commutation (36) ou le clapet antiretour (147) et la soupape de commutation (36) sont disposés dans un boîtier commun (148).

3. Porte-pièce selon la revendication 1 ou 2, **caractérisé en ce que** le clapet antiretour (147) est disposé sur une entrée (144) de la soupape de commutation (36) et ferme l'entrée (144) en cas de perte de dépression.

4. Porte-pièce selon la revendication 3, **caractérisé en ce qu'**un canal d'air de tête aspirante (143) destiné à l'alimentation de la tête aspirante (13) en dépression se détache d'un canal d'air (145) reliant l'entrée (144) de la soupape de commutation (36) au raccordement d'alimentation en vide (38), et **en ce que** le clapet antiretour (147) est disposé sur l'entrée (144) de la soupape de commutation (36) et ferme l'entrée (144) en cas de perte de dépression suscitée par l'actionnement de la tête aspirante (13).

5. Porte-pièce selon l'une quelconque des revendications 1 à 4, **caractérisé en ce que** le clapet antiretour (147) présente un organe de soupape (149) sollicité en position de fermeture, en particulier sollicité par un ressort pour l'ouverture et la fermeture d'une entrée (144) reliée au raccordement d'alimentation au vide (38) de la soupape de commutation (36).

6. Porte-pièce selon l'une quelconque des revendications précédentes, **caractérisé en ce que** la soupape de commutation (36) présente une partie de canal d'air (154) avec au moins un canal d'air d'alimentation (157) relié au raccordement d'alimentation au vide (38) et au moins un canal d'air de pied à poser (159) relié au raccordement de pied à poser (39), et **en ce que** le canal d'air d'alimentation (157) et le canal d'air de pied à poser (159) débouchent sur une périphérie extérieure de la partie de canal d'air (154) et peuvent être reliés ou séparés de manière étanche à la pression par un élément de commutation (37) logé de manière mobile sur la périphérie extérieure de la partie de canal d'air (154).

7. Porte-pièce selon la revendication 6, **caractérisé en ce que** l'élément de commutation (37) contient un élément coulissant (161) logé de manière mobile sur la partie de canal d'air (154), en particulier actionnable manuellement.

8. Porte-pièce selon la revendication 6 ou 7, **caractérisé en ce que** l'élément coulissant (161) contient un manchon coulissant (162) qui est traversé par la partie de canal d'air (154) et sur la périphérie intérieure duquel se trouve un espace de liaison (163) pour la liaison des orifices (158, 160) du canal d'air d'alimentation (157) et du canal d'air de pied à poser (159).

9. Porte-pièce selon l'une quelconque des revendications 6 à 8, **caractérisé en ce que** le canal d'air d'alimentation (157) et/ou le canal d'air de pied à poser (159) présentent chacun au moins deux orifices (158, 160) sur le côté extérieur de la partie de canal d'air (154).

10. Porte-pièce selon la revendication 9, **caractérisé en ce que** les orifices respectifs (158, 160) du canal d'air d'alimentation (157) et du canal d'air de pied à poser (159) présentent sensiblement la même position longitudinale ou rotative par rapport à un sens de déplacement de l'élément de commutation (37).

11. Porte-pièce selon l'une quelconque des revendications précédentes, **caractérisé en ce que** la soupape de commutation (36) est une soupape à 3/2 voies.
